# EUROPEAN PATENT SPECIFICATION

(11) **EP 4 535 552 B1**
(45) Date of publication and mention of the grant of the patent: **28.10.2026**
(21) Application number: 23846931.6
(22) Date of filing: 21.07.2023
(51) Int. Cl.: H01M 50/595, H01M 50/536, H01M 50/46, H01M 50/105, H01M 10/0585, H01M 50/178, H01M 50/54, H01M 10/04

(54) **SYSTEMS AND METHODS FORDETERMINING AND MANAGING BATTERY DEGRADATION**
SYSTEME UND VERFAHREN ZUR IDENTIFIKATION UND VERMEIDUNG VON BATTERIE DEGRADIERUNG
SYSTÈMES ET PROCÉDÉS D'IDENTIFICATION ET DE PRÉVENTION DE DÉGRADATION DE BATTERIE

(30) Priority: 27.07.2022 KR 20220093537; 18.07.2023 KR 20230093435
(43) Date of publication of application: 09.04.2025
(73) Proprietor: LG Energy Solution, Ltd., Seoul 07335 (KR)
(72) Inventor: KIM, Jeong Yeon, Daejeon 34122 (KR); JUNG, Hun Bum, Daejeon 34122 (KR); LEE, Jin Yong, Daejeon 34122 (KR); PARK, Min Cheol, Daejeon 34122 (KR); KIM, Seong Jin, Daejeon 34122 (KR)
(74) Representative: Plasseraud IP
(86) International application number: PCT/KR2023/010615
(87) International publication number: WO 2024/025272

(56) References cited:
- WO-A1-2022/085917
- JP-A- 2016 186 868
- JP-A- 2019 207 794
- KR-A- 20020 076 468
- KR-A- 20070 056 493
- KR-A- 20210 061 619
- KR-A- 20220 100 478

## Description

### TECHNICAL FIELD

### CROSS-REFERENCE TO RELATED APPLICATION

The present application claims the benefit of the priority of Korean Patent Application Nos. 10-2022-0093537, filed on July 27, 2022, and 10-2023-0093435, filed on July 18, 2023.

### TECHNICAL FIELD

The present invention relates to an apparatus and method for manufacturing a secondary battery and a secondary battery manufactured thereby. The present invention relates to an apparatus and method for manufacturing a secondary battery, in which defects such as damage or disconnection of an electrode tab does not occur while the electrode tab and an electrode lead of an electrode assembly are connected through welding, and welding defects such as weak welding or excessive welding occurs are prevented from occurring to realize excellent quality, and a secondary battery manufactured thereby.

### BACKGROUND ART

In recent years, the price of energy sources increases due to the depletion of fossil fuels, the interest in environmental pollution is amplified, and the demand for eco-friendly alternative energy sources is becoming an indispensable factor for future life. Accordingly, studies on various power generation technologies such as solar power, wind power, and tidal power are continuing, and power storage devices such as batteries for more efficiently using the generated electrical energy are also of great interest.

Furthermore, as technology development and demand for electronic mobile devices and electric vehicles using batteries increase, the demands for batteries as energy sources are rapidly increasing. Thus, many studies on batteries which are capable of meeting various demands have been conducted.

Secondary batteries are receiving a lot of attention as an energy source in a variety of products such as mobile devices and electric vehicles. These secondary batteries are an excellent energy resource, which is capable of replacing the use of existing products using fossil fuels, and are attracting attention as an eco-friendly energy source because the secondary batteries do not generate by-products due to the energy use.

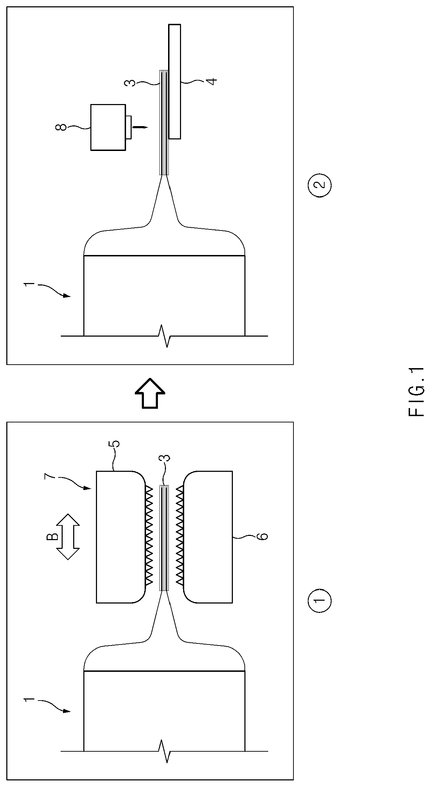

FIG. 1 is a side view illustrating a process of connecting an electrode tab and an electrode lead using a method for manufacturing a secondary battery according to the related art.

Referring to FIG. 1, in a method for manufacturing a secondary battery according to the related art, a process of connecting an electrode tab to an electrode lead is performed by performing a pre-welding process (see ① in FIG. 1) first and then performing a main welding process (see ② in FIG. 1).

The pre-welding process (see ① in FIG. 1) is a process of gathering a plurality of electrode tabs extending from an electrodes of an electrode assembly to bond the electrode tabs to each other through ultrasonic welding. As a result, an electrode tab assembly may be formed. The pre-welding is a method of disposing the plurality of electrode tabs between an upper horn and a lower anvil to apply ultrasonic vibration B to the horn while physically pressing through the horn and the anvil.

The main welding process (see ② in FIG. 1) is a process of bonding the electrode leads to the gathered electrode tab assembly. In this process, laser welding is performed using a laser welder to bond the electrode tab to the electrode lead.

Such a method according to the related art has the following problems. First, since the pre-welding method is the method in which the physical pressure is applied to the electrode tab with the horn and the anvil, and the ultrasonic vibration is applied to the horn, there is a problem of inevitably damaging the electrode tab. In addition, during the ultrasonic welding, there is a problem of welding defects such as weak welding and excessive welding due to abnormal welding conditions such as energy, power, a welding time, and an applied pressure. In addition, there is a problem of welding defects and defects such as disconnection of the electrode tab due to a deviation in horizontality of the horn and the anvil or abnormal lamination during the welding.

In addition, there is inevitable problems that occurs due to the use of the horn and the anvil using the ultrasonic welding. Specifically, there is a problem of requiring replacement cycle management due to wear of the horn and the anvil, and there is a risk of disconnection of the electrode tab due to an edge curvature radius (edge R) of the horn and the anvil. In addition, there is a risk of welding defects due to poor condition of the ultrasonic welder.

In addition, in the main welding process, when the electrode lead overlaps the electrode tab, there is a problem that an edge of the electrode lead scratches the electrode tab to cause damage of the electrode tab, and there is a problem that the electrode tab is scratched by a laser mask jig during the laser welding.

KR 2021 0061619 and WO2022/085917 are known.

### DISCLOSURE OF THE INVENTION

### TECHNICAL PROBLEM

The present invention is devised to solve the above problems, and an object of the present invention is to provide an apparatus and method for manufacturing a secondary battery, in which defects such as damage or disconnection of an electrode tab does not occur while the electrode tab and an electrode lead of an electrode assembly are connected through welding, and welding defects such as weak welding or excessive welding occurs are prevented from occurring to realize excellent quality, and a secondary battery manufactured thereby.

### TECHNICAL SOLUTION

A method for manufacturing a secondary battery, in which a plurality of electrode tabs extending from one end of an electrode assembly formed by stacking electrodes and separators are welded to an electrode lead, according to the present invention includes: a process (a) of preparing a tape having a required size and shape; a process (b) of gathering the plurality of electrode tabs to form an electrode tab stack; a process (c) of taping the electrode tab stack with the tape; and a process (d) of welding the electrode tab stack, which is taped, to the electrode lead.

The method may further include a cutting process (c-1) of cutting one end of the electrode tab stack, which is taped, between the process (c) and the process (d).

The process (a) of preparing the tape may include a process of cutting the tape in a required size and shape to prepare the tape.

In the process (d) of forming the electrode tab stack, the plurality of electrode tabs may be pressed or guided from upper and lower sides of the electrode tabs to gather the electrode tabs so as to form the electrode tab stack.

In the taping process (c), the tape may be attached to each of both ends of the electrode tab stack based on a width direction of the electrode tab stack.

In the taping process (c), the tape may be attached to surround top, side, and bottom surfaces of the electrode tab stack.

In the taping process (c), the tape may not be attached to a portion, at which the electrode lead is to be welded, on the top and bottom surfaces of the electrode tab stack.

In the taping process (c), the tape may be attached to each of both ends of the electrode tab stack based on a width direction of the electrode tab stack, wherein the tape may be attached to the electrode tab stack so that a surplus part protruding further outward from an end of the electrode tab stack in a width direction is formed.

In the taping process (c), the surplus part may have a shape in which a portion and the other portion of the tape, which is disposed outside the end of the electrode tab stack in the width direction face each other to be bonded to each other.

The process (b) and the process (c) may be performed at the same time.

In the process (d) of welding the electrode lead, the electrode tab stack and the electrode lead may be welded to each other by laser welding.

In the process (d) of welding the electrode lead, the electrode tab stack and the electrode lead may be welded to each other while pulling the surplus part disposed at each of both sides of the electrode tab stack to both sides based on the width direction of the electrode tab stack in a state of holding the surplus part using a clamping device.

An apparatus for manufacturing a secondary battery, in which a plurality of electrode tabs extending from one end of an electrode assembly formed by stacking electrodes and separators are welded to an electrode lead, according to the present invention includes: a tape cutting unit configured to cut a tape to a required size and shape; a tab guide configured to gather the plurality of electrode tabs so as to provide an electrode tab stack; a tape attaching machine configured to tape the cut tape on the electrode tab stack; and a laser welder configured to weld the electrode tab stack, which is taped, to the electrode lead.

The tape attaching machine may be configured to tape the tape on the electrode tab stack, wherein the tape may be attached to surround top, side, and bottom surfaces of the electrode tab stack.

The tape attaching machine may be configured to tape the tape on the electrode tab stack, wherein the tape may be attached to the electrode tab stack so that a surplus part protruding outward from an end of each of the electrode tabs in a width direction is provided.

The apparatus may further include a clamping device configured to pull the surplus part disposed at each of both sides of the electrode tab stack to both sides based on the width direction of the electrode tab stack.

The apparatus may further include a cutter configured to cut one end of the electrode tab stack, which is taped, by the tape attaching machine.

A secondary battery according to the present invention includes: an electrode assembly provided by stacking electrodes and separators; a pouch configured to accommodate the electrode assembly in an internal space; an electrode tab stack provided by gathering a plurality of electrode tabs extending from one end of the electrode assembly and disposed inside the pouch; a tape configured to surround the electrode tab stack; and an electrode lead having one side connected to the electrode tab stack and the other side protruding to the outside of the pouch.

The tape may be attached to each of both ends of the electrode tab stack based on a width direction of the electrode tab stack.

The tape may be attached to each of both ends of the electrode tab stack based on a width direction of the electrode tab stack, wherein the tape may include a surplus part protruding further outward from an end of the electrode tan stack in a width direction.

The surplus part may have a shape in which a portion and the other portion of the tape, which is disposed outside the end of the electrode tab stack in the width direction face each other to be bonded to each other.

### ADVANTAGEOUS EFFECTS

In the apparatus and method for manufacturing the secondary battery and the secondary battery manufactured thereby, in which the defects such as the damage or disconnection of the electrode tab does not occur while the electrode tab and the electrode lead of the electrode assembly are connected through the welding, and the welding defects such as the weak welding or the excessive welding occurs are prevented from occurring to realize the excellent quality.

### BRIEF DESCRIPTION OF THE DRAWINGS

FIG. 1 is a side view illustrating a process of connecting an electrode tab and an electrode lead using a method for manufacturing a secondary battery according to a related art.
FIG. 2 is a side view illustrating a process of connecting an electrode tab to an electrode lead through a method for manufacturing a secondary battery according to Embodiment 1 of the present invention.
FIG. 3 is a side view illustrating a process of connecting an electrode tab to an electrode lead according to a modified example of Embodiment 1 of the present invention.
FIG. 4 is a perspective view illustrating a state in which a tape is attached to an electrode tab stack.
FIG. 5 is a perspective view illustrating a state in which one end of the electrode tab stack is cut.
FIG. 6 is a perspective view illustrating an internal configuration of a secondary battery according to Embodiment 2 of the present invention.
FIG. 7 is a side view illustrating a process of connecting an electrode tab to an electrode lead through a method for manufacturing a secondary battery according to Embodiment 3 of the present invention.
FIG. 8 is a perspective view illustrating a state in which a tape is attached to an electrode tab stack according to Embodiment 3 of the present invention.
FIG. 9 is a cross-sectional view illustrating a principle in which a surplus part of a tape is generated according to Embodiment 3 of the present invention.
FIG. 10 is a perspective view illustrating a state in which one end of the electrode tab stack is cut according to Embodiment 3 of the present invention.
FIG. 11 is a perspective view illustrating an internal configuration of a secondary battery according to Embodiment 4 of the present invention.

### MODE FOR CARRYING OUT THE INVENTION

Hereinafter, preferred embodiments of the present invention will be described in detail with reference to the accompanying drawings so that those of ordinary skill in the art may easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor may properly define the concept of a term to describe and explain his or her invention in the best ways.

### Embodiment 1

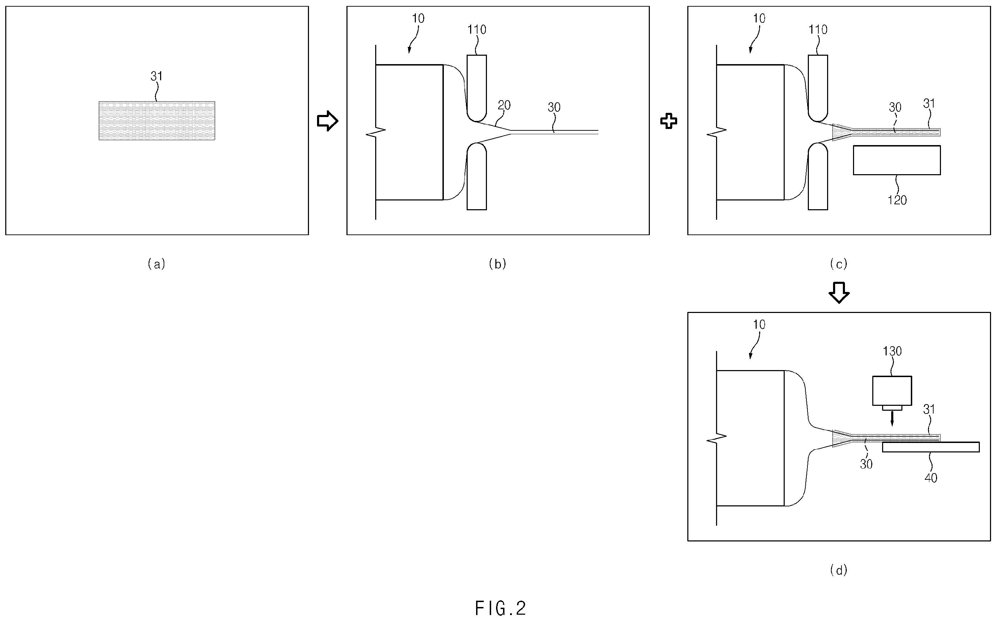

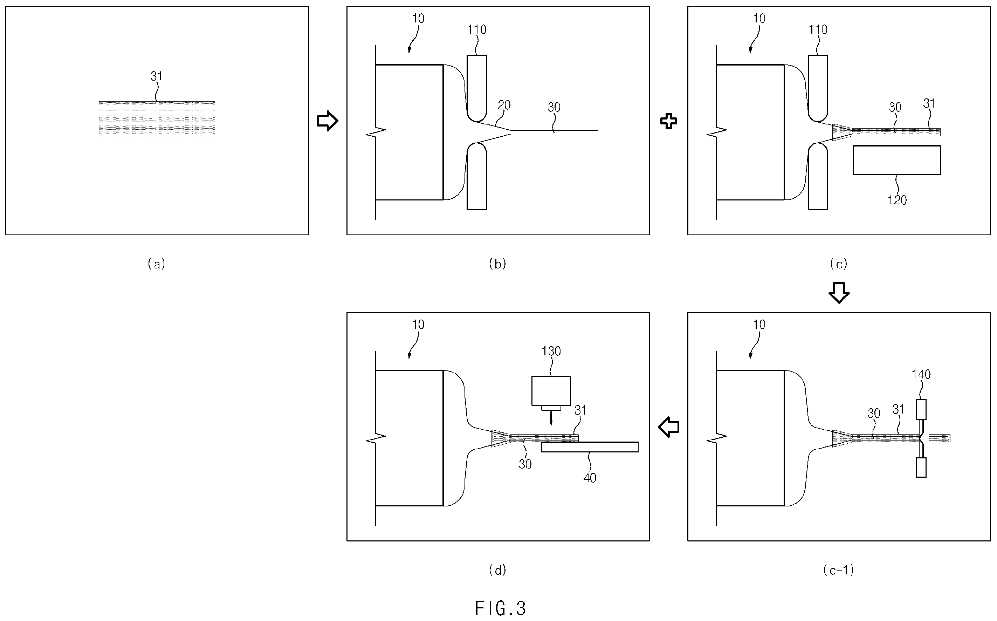

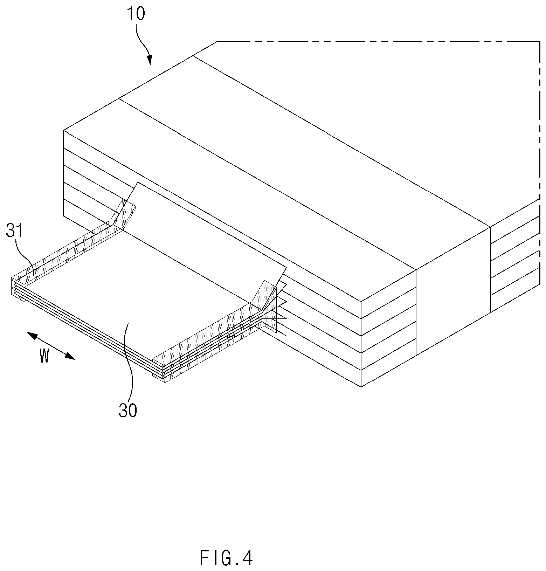

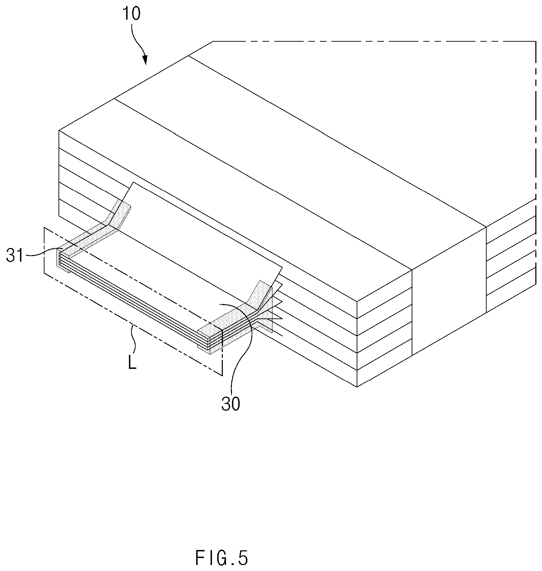

FIG. 2 is a side view illustrating a process of connecting an electrode tab to an electrode lead through a method for manufacturing a secondary battery according to Embodiment 1 of the present invention. FIG. 3 is a side view illustrating a process of connecting an electrode tab to an electrode lead according to a modified example of Embodiment 1 of the present invention. FIG. 4 is a perspective view illustrating a state in which a tape is attached to an electrode tab stack. FIG. 5 is a perspective view illustrating a state in which one end of the electrode tab stack is cut.

Referring to FIG. 2, a method for manufacturing a secondary battery according to Embodiment 1 of the present invention may relate to a method for manufacturing a secondary battery, in which a plurality of electrode tabs 20 extending from one end of an electrode assembly formed by stacking electrodes and separators is welded to an electrode lead 40. The electrode assembly 10 may be formed by alternately stacking the electrodes and the separators, and the electrode tab 20 may be a metal tab connected to each of the electrodes and protruding from one side of the electrode. Thus, the plurality of electrode tabs 20 may have a structure extending from one end of the electrode assembly 10. A stack in which the plurality of electrode tabs 20 are combined may be coupled again to the electrode lead 40 to manufacture a secondary battery.

The method for manufacturing the secondary battery according to Embodiment 1 of the present invention may include a process (a) of preparing a tape, a process (b) of forming an electrode tab stack, a process (c) of taping the tape, and a process (d) of welding an electrode lead.

The process (a) of preparing the tape may be a process of preparing a tape 31 having a required size and shape. (a) of FIG. 2 illustrates this process. In this process, the tape 31 may be cut using a tape cutting unit (not shown) that cuts the tape 31. The tape 31 may be prepared by cutting the tape 31 into the required size and shape using the tape cutting unit.

(a) of FIG. 2 illustrates the tape 31 in which the cutting is completed. Here, the tape 31 having the required size and shape may mean that the tape 31 has a size and shape required to attach the tape 31 so that the electrode tabs 20 are bundled in a state in which the electrode tabs 20 are gathered together. The process (a) of cutting and preparing the tape 31 may not necessarily have to be performed first and may be performed in any process as long as the process is performed only before the process (c) of taping the tape, which will be described below.

The process (b) of forming the electrode tab stack may be a process of forming the electrode tab stack 30 by gathering the plurality of electrode tabs 20. (b) of FIG. 2 illustrates this process. This process may be performed using a tab guide 110 that gathers the plurality of electrode tabs 20 to form the electrode tab stack 30. Referring to (b) of FIG. 2, the tab guide 110 may move downward from upper and lower portions of the electrode tab 20 in a direction of the electrode tab 20 to gather the electrode tabs 20. The tab guide 110 may press or guide the plurality of electrode tabs 20 from upper and lower sides of the electrode tabs 20 to gather the electrode tabs 20, thereby forming the electrode tab stack 30.

In addition, an end of the tab guide 110 may have a rounded shape. This shape may prevent the electrode tabs 20 from being damaged while the tab guide 110 vertically applies a pressure to the plurality of electrode tabs 20 to gather the electrode tabs 20.

The process (c) of taping the tape may be a process of taping the tape 31 to the electrode tab stack 30. This process may be a process in which the stack 30 of the gathered electrode tabs is maintained in a stable shape without moving or being disturbed. This process may be performed to gather the electrode tabs 20 so as to facilitate welding in the later welding process of the electrode lead 40.

(c) of FIG. 2 illustrates this process. In addition, FIG. 4 illustrates a state in which the tape 31 is attached to the electrode tab stack 30 in the process (c). Referring to (c) of FIG. 2 and FIG. 4, in the taping process (c), the tape 31 may be attached to each of both ends of the electrode tab stack 30 based on a width direction W of the electrode tab stack 30. In addition, the tape 31 may be attached to both the ends and also may be attached while surrounding top, side, and bottom surfaces of the electrode tab stack 30. To gather the electrode tabs 20, the electrode tabs 20 may be attached in a tight state in which tension is applied or may be attached with appropriate strength so as not to be too tight. Referring to FIG. 4, the tape 31 may be attached to a horizontal portion of a portion at which the electrode tabs 20 are gathered and may also be partially attached to an inclined portion extending from the horizontal portion toward the electrode assembly.

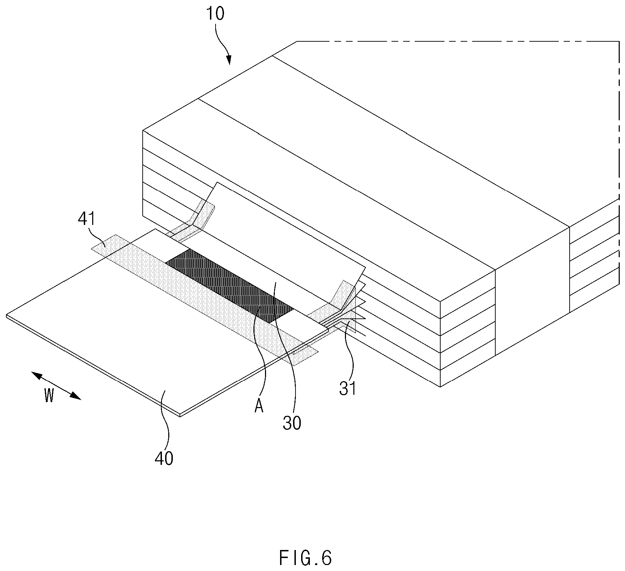

In the taping process (c), the tape 31 may be attached to a top or bottom surface of the electrode tab stack 30, but may not be attached to the portion at which the electrode lead 40 is to be welded. As described above, a welding area A on which the electrode lead 40 is welded may be formed at the portion at which the tape 31 is not attached (see FIG. 6). Since the portion at which the tape 31 is disposed is an unsuitable surface for the welding, the tape 31 may not be attached to the surface to be welded. When attaching the tape 31, a tape attaching machine 120 may be used to tape the cut tape 31 to the electrode tab stack 30.

Here, a fundamental function of the tape attaching machine 120 may be a function of attaching the cut tape 31 to the electrode tab 20, but the tape attaching machine 120 may also be configured to have a function of cutting the tape 31. In this case, the tape attaching machine 120 may also function as a tape cutting unit. When using the tape attaching machine 120, which has the function of the tape cutting unit, the operation may be simplified and efficient. That is, after completing the cutting of the tape 31, the user may holds the tape 31 as it is without the need to move to another position and then may attach the tape to the electrode tab 20 to realize significantly efficient operation.

The processes (b) and (c) may be performed separately, but may also be performed together. That is, a more efficient and effective process may be possible if the process (b) of forming the electrode tab stack and the process (c) of taping the tape are performed at the same time. That is, as illustrated in (c) of FIG. 3, the tab guide 110 may press the electrode tabs 20, gather the electrode tabs 20, and fix the electrode tabs 20, and then, the tape attaching machine 120 may attach the tape 31 to the gathered electrode tab stack 30 to realize more accurate taping.

The process (d) of welding the electrode tab stack and the electrode lead may be a process of welding the taped electrode tab stack 30 and the electrode lead 40, which overlap each other, using a welder. This process may be a process of bonding the electrode tab stack 30 to the electrode lead 40 by the welding. In addition, specifically, the process (d) of welding the electrode lead 40 may be a process of laser-welding the electrode tab stack 30 and the electrode lead 40 through the laser welding. (d) of FIG. 2 illustrates this process. This process may be performed using the laser welder 130, which is a device that irradiates welding laser to the electrode tab stack 30 and the electrode lead 40.

The state in which the electrode lead 40 is bonded to the electrode tab stack 30 by the laser welding is illustrated in FIG. 6. Referring to FIG. 6, the welding area A on which the laser welding is performed may be an area on which the tape 31 is not attached. That is, as illustrated in FIG. 6, the welding area A may be a central area of the top surface of the electrode tab stack 30. Alternatively, the electrode lead 40 is not limited to being welded to the top surface of the electrode tab stack 30, and the electrode lead 40 may also be welded to the bottom surface of the electrode tab stack 30.

As described above, in the apparatus and method for manufacturing the secondary battery according to Embodiment 1 of the present invention, unlike the pre-welding method according to the related art, the tape 31 may be used to manufacture the secondary battery without damaging the electrode tab 20. In addition, since the ultrasonic welding itself is not performed, problems such as welding defects caused by the ultrasonic welding may be fundamentally solved. For example, the welding defects due to deviation in horizontality of a horn and an anvil or abnormal stack during the welding, and disconnection defects of the electrode tab 20 may not occur. In addition, since the ultrasonic welding is not used, various problems caused by using the ultrasonic welder may not occur.

When using the method of gathering the electrode tabs 20 using the tape 31 according to Embodiment 1 of the present invention, the electrode tabs 20 may be gathered quickly and efficiently to efficiently perform main welding of the electrode lead 40 and the electrode tab 20. In addition, the electrode tabs 20 may be gathered to secure a length margin of the electrode tabs 2 well.

In addition, in the main welding process, when the electrode lead 40 overlaps the electrode tab 20, a problem in which an edge of the electrode lead 40 stabs the electrode tab 20 to damage the electrode tab 20 may be reduced. Since the tape 31 covers and protects the surface of the electrode tab 20, the damage may not occur even if the edge is in contact with the portion. In addition, it is possible to prevent the problem of stabbing the electrode tab 20 caused by the laser mask jig during the laser welding.

Embodiment 1 of the present invention may be implemented in an additional modified form. FIG. 3 is a side view illustrating a process of connecting an electrode tab 20 to an electrode lead 40 according to a modified example of Embodiment 1 of the present invention.

Referring to FIG. 3, in a modified example of Embodiment 1 of the present invention, a cutting process c-1 may be further performed between the processes (c) and (d).

Specifically, the cutting process c-1 may be a process of cutting one end of the taped electrode tab stack 30. (c-1) of FIG. 3 illustrates this process. In the modified example of Embodiment 1 of the present invention, the remaining processes are the same as Embodiment 1 of FIG. 2, except that the cutting process c-1 is further performed between the process (c) of taping the tape and the process (d) of welding the electrode tab stack to the electrode lead. The cutting process c-1 may be performed using a cutter 140, which cuts one end of the electrode tab stack 30 for which the taping is completed by the tape attaching machine 120 to an appropriate length.

When the electrode tab stack 30 is cut to the appropriate length, the efficiency of the laser welding operation may be improved by cutting the electrode tab stack 30 to the appropriate length for the subsequent laser welding. In addition, there is an effect of being able to adjust the length of the electrode tab stack 30 to suit a size of the final product of the secondary battery. Even at this time, in the method of fixing the electrode tab 20 with the tape 31 of the present invention, the electrode tab 20 may be fixed so that the cutting of the electrode tab 20 is easy.

FIG. 5 illustrates a state in which one end of the electrode tab stack is cut by the cutter 140. FIG. 5 illustrates a shape in which the electrode tab stack 30 is neatly cut along a cutting line L. In FIG. 5, a central area of a top surface of the electrode tab 20 to which the tape 31 is not attached may be a laser welding area A on which the electrode lead 40 is welded. After the cutting operation, welding may be performed accurately on the welding area A.

An apparatus for manufacturing a secondary battery may be required to perform the method for manufacturing the secondary battery according to Embodiment 1 of the present invention. The apparatus for manufacturing the secondary battery may be an apparatus for manufacturing a secondary battery, in which a plurality of electrode tabs 20 extending from one end of an electrode assembly formed by stacking electrodes and separators is welded to an electrode lead 40.

The apparatus for manufacturing the secondary battery for performing the method for manufacturing the secondary battery according to Embodiment 1 of the present invention may include a tape cutting unit (not shown), a tab guide 110, a tape attaching machine 120, and a laser welder 130.

The tape cutting unit may be configured to cut a tape 31 into a required size and shape. The tab guide 110 may be configured to gather a plurality of electrode tabs 20 to provide an electrode tab stack 30. The tape attaching machine 120 may be configured to tape the cut tape 31 to the electrode tab stack 30. In addition, the laser welder 130 may be configured to weld the taped electrode tab stack 30 to the electrode lead 40. Here, the tape attaching machine 120 may also function as a tape cutting unit. In addition, according to the modified example of Embodiment 1 of the present invention, the apparatus for manufacturing the secondary battery may further include a cutter 140 for cutting one end of the electrode tab stack 30 on which the taping is completed by the tape attaching machine 120.

### Embodiment 2

FIG. 6 is a perspective view illustrating an internal configuration of a secondary battery according to Embodiment 2 of the present invention.

Embodiment 2 of the present invention is different from Embodiment 1 in that it relates to a secondary battery manufactured by the method for manufacturing the secondary battery according to Embodiment 1.

The contents that are duplicated with Embodiment 1 will be omitted as much as possible, and Embodiment 2 will be described with a focus on the differences. That is, it is obvious that contents that are not described in Embodiment 2 may be regarded as the contents of Embodiment 1 if necessary.

Referring to FIG. 6, a secondary battery according to Embodiment 2 of the present invention may include an electrode assembly 10, a pouch, an electrode tab stack 30, an electrode lead 40, and a tape 31.

The electrode assembly 10 may be a stack provided by stacking electrodes and separators. The pouch (not shown) may be configured to accommodate the electrode assembly 10 in an internal space. The electrode tab stack 30 may be provided by gathering the plurality of electrode tabs 20 that extend from one end of the electrode assembly 10 and are disposed inside the pouch. The tape 31 may be configured to surround the electrode tab stack 30. Here, the tape 31 may be attached to each of both ends of the electrode tab stack 30 based on a width direction W of the electrode tab stack 30.

When attached to both the ends, the tape 31 may be attached while surrounding top, side, and bottom surfaces of the electrode tab stack 30. To gather the electrode tabs 20, the electrode tabs 20 may be attached in a tight state in which tension is applied or may be attached with appropriate strength so as not to be too tight. Based on the side view, the tape 31 may be attached to a horizontal portion of a portion at which the electrode tabs 20 are gathered and may also be partially attached to an inclined portion extending from the horizontal portion toward the electrode. That is, a thickness of the electrode tab stack 30 may be constant in the horizontal portion, but may be thick in the inclined portion, and the tape 31 may be attached to portions of the horizontal portion and the inclined portion.

In addition, the tape 31 may not be attached to top and bottom surfaces of the electrode tab stack 30 on which the electrode lead 40 is to be welded. As described above, a welding area A on which the electrode lead 40 is welded may be formed at the portion at which the tape 31 is not attached (see FIG. 6). Since an area on which the tape 31 is attached is an unsuitable surface for welding, the tape 31 may not be attached to the surface to be welded.

The electrode lead 40 may have one side connected to the electrode tab stack 30 and the other side protruding to the outside of the pouch (not shown). One side of the electrode lead 40 may be connected to the electrode tab stack 30 in the welding area A through laser welding. In addition, the welding may be performed excluding an area on which a lead film 41 is to be attached.

In addition, the secondary battery according to Embodiment 2 of the present invention as described above may be a secondary battery having excellent quality as various effects of the invention described in foregoing Embodiment 1 are expressed.

### Embodiment 3

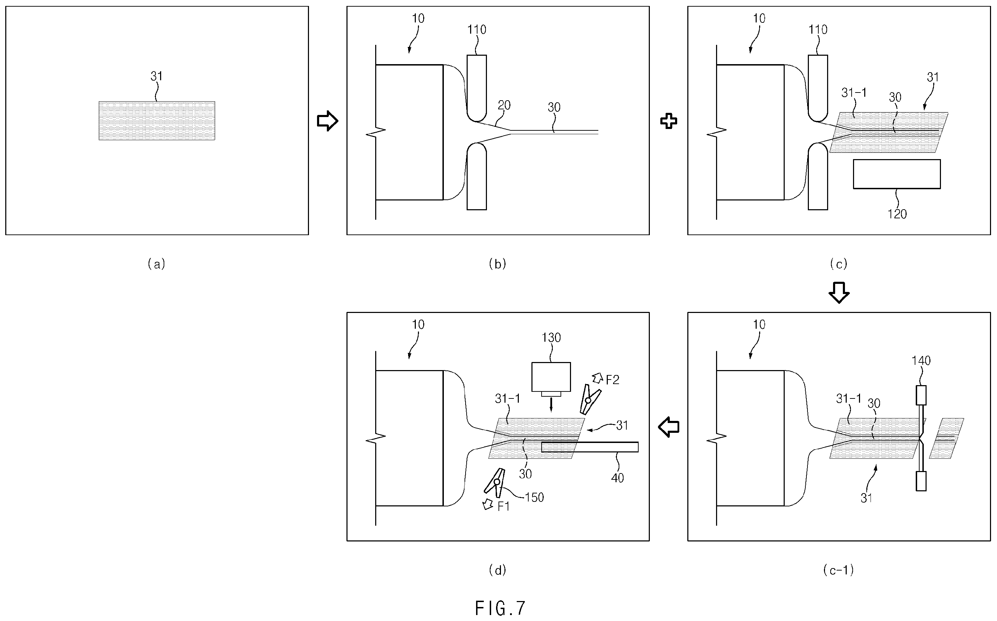

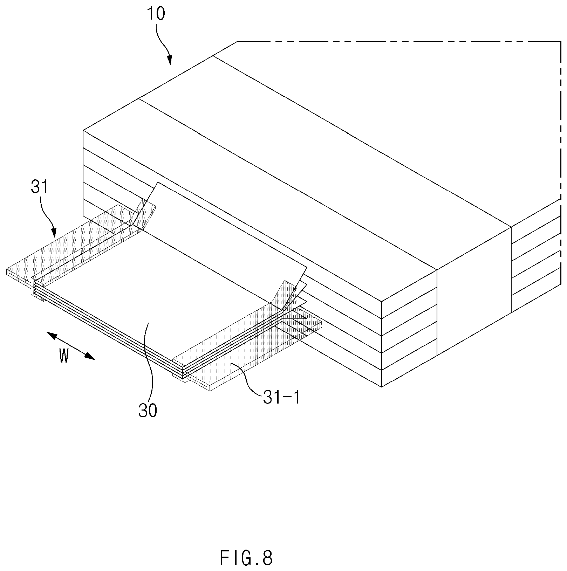

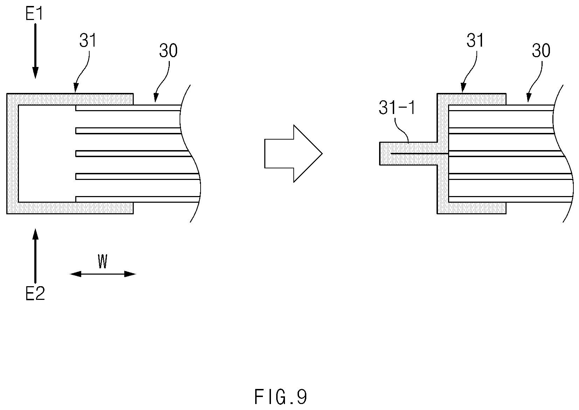

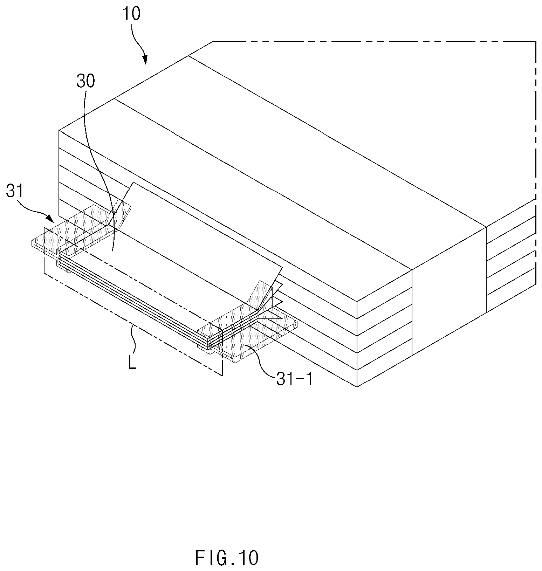

FIG. 7 is a side view illustrating a process of connecting an electrode tab to an electrode lead through a method for manufacturing a secondary battery according to Embodiment 3 of the present invention. FIG. 8 is a perspective view illustrating a state in which a tape is attached to an electrode tab stack according to Embodiment 3 of the present invention. FIG. 9 is a cross-sectional view illustrating a principle in which a surplus part of a tape is generated according to Embodiment 3 of the present invention. FIG. 10 is a perspective view illustrating a state in which one end of the electrode tab stack is cut according to Embodiment 3 of the present invention.

Embodiment 3 is different from Embodiments 1 and 2 in that, when attaching the tape to the electrode tab stack, the tape is attached so that a surplus part is disposed on each of both sides of the electrode tab.

The contents that are duplicated with Embodiments 1 and 2 will be omitted as much as possible, and Embodiment 3 will be described with a focus on the differences. That is, it is obvious that the contents that are not described in Embodiment 3 may be supplemented as contents of Embodiments 1 and 2 if necessary.

Referring to FIG. 7, a method for manufacturing a secondary battery according to Embodiment 3 of the present invention may also relate to a method for manufacturing a secondary battery, in which a plurality of electrode tabs 20 extending from one end of an electrode assembly formed by stacking electrodes and separators is welded to an electrode lead 40.

The electrode assembly 10 may be formed by alternately stacking the electrodes and the separators, and the electrode tab 20 may be a metal tab connected to each of the electrodes and protruding from one side of the electrode. Thus, the plurality of electrode tabs 20 may have a structure extending from one end of the electrode assembly 10. A stack in which the plurality of electrode tabs 20 are combined may be coupled again to the electrode lead 40 to manufacture a secondary battery.

The method for manufacturing the secondary battery according to Embodiment 3 of the present invention may include a process (a) of preparing a tape, a process (b) of forming an electrode tab stack, a process (c) of taping the tape, and a process (d) of welding an electrode lead.

Alternatively, in Embodiment 3, a cutting process c-1 may be further performed between the processes (c) and (d) .

The processes (a) and (b) of FIG. 7 may be the same as those previously described in Embodiment 1.

The process (c) of taping the tape may be a process of taping the tape 31 to the electrode tab stack 30. This process may be a process in which the stack 30 of the gathered electrode tabs is maintained in a stable shape without moving or being disturbed. This process may be performed to gather the electrode tabs 20 so as to facilitate welding in the later welding process of the electrode lead 40.

(c) of FIG. 7 illustrates this process. In addition, FIG. 8 illustrates a state in which the tape 31 is attached to the electrode tab stack 30 in the process (c). Referring to (c) of FIG. 7 and FIG. 8, in the taping process (c), the tape 31 may be attached to each of both ends of the electrode tab stack 30 based on a width direction W of the electrode tab stack 30.

In the method for manufacturing the secondary battery according to Embodiment 3 of the present invention, the tape 31 may be attached to the electrode tab stack 30 so that a surplus part 31-1 protruding further outward from an end of the electrode tab stack 30 in a width direction W is provided.

In the cross-sectional view of FIG. 9, a principle by which the surplus part 31-1 is generated is illustrated. First, referring to the drawing at a left side of an arrow in FIG. 9, the tape 31 may be attached to surround a side portion of the electrode tab stack 30 so that there is a portion remaining further outward from an end of the electrode tab based on the width direction W of the electrode tab stack 30. In addition, after attaching the tape 31 in this manner, a process of attaching upper and lower tapes to each other by vertically applying force E1 and E2 to the remaining outer portion. In this manner, a shape of the tape may be provided as shown at the right side of the arrow in FIG. 9. Here, the surplus part 31-1 may be provided so that a portion of the tape 31 disposed outside the end of the electrode tab stack 30 in the width direction and the other portion of the tape 31 face each other.

In this manner, the surplus part 31-1 of the tape 31 may be generated. When the formation of the surplus part 31-1 is completed in this manner, the electrode assembly may have the shape as illustrated in FIG. 8.

To gather the electrode tabs 20, the electrode tabs 20 may be attached in a tight state in which tension is applied or may be attached with appropriate strength so as not to be too tight. Referring to FIG. 8, the tape 31 may be attached to a horizontal portion of a portion at which the electrode tabs 20 are gathered and may also be partially attached to an inclined portion extending from the horizontal portion toward the electrode assembly.

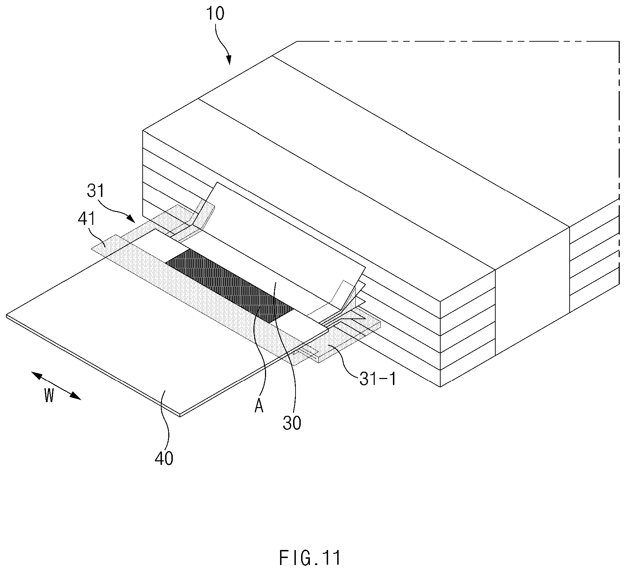

In the taping process (c), the tape 31 may be attached to a top or bottom surface of the electrode tab stack 30, but may not be attached to the portion at which the electrode lead 40 is to be welded. As described above, a welding area A on which the electrode lead 40 is welded may be formed at the portion at which the tape 31 is not attached (see FIG. 11). Since the portion at which the tape 31 is disposed is an unsuitable surface for the welding, the tape 31 may not be attached to the surface to be welded. When attaching the tape 31, a tape attaching machine 120 may be used to tape the cut tape 31 to the electrode tab stack 30.

Here, the tape attaching machine 120 may tape the tape 31 to the electrode tab stack 30 and may be attached to top, side, and bottom surfaces of the electrode tab stack 30. However, in Embodiment 3 of the present invention, the tape attaching machine 120 may tape the tape 31 to the electrode tab stack 30, but the surplus part 31-1 protrudes further outward from an end of the electrode tab in the width direction is provided.

In addition, a clamping device 150 that pulls the surplus part 31-1 disposed at both sides of the electrode tab stack to both sides based on the width direction W of the electrode tab stack 30 may be further provided. The clamping device 150 may be mainly used in the process of welding the electrode lead 40, which will be described below, but may also be used in the taping process (c) to tightly attach the tape 31.

The processes (b) and (c) may be performed separately, but may also be performed together. That is, a more efficient and effective process may be possible if the process (b) of forming the electrode tab stack and the process (c) of taping the tape are performed at the same time.

Referring to FIG. 7, in Embodiment 3 of the present invention, a cutting process c-1 may be further performed between the processes (c) and (d).

Specifically, the cutting process c-1 may be a process of cutting one end of the taped electrode tab stack 30. (c-1) of FIG. 7 illustrates this process.

The cutting process c-1 may be performed using a cutter 140, which cuts one end of the electrode tab stack 30 for which the taping is completed by the tape attaching machine 120 to an appropriate length. In Embodiment 3 of the present invention, during the cutting process, the surplus part 31-1 of the tape may be cut together.

When the electrode tab stack 30 is cut to the appropriate length, the efficiency of the laser welding operation may be improved by cutting the electrode tab stack 30 to the appropriate length for the subsequent laser welding. In addition, there is an effect of being able to adjust the length of the electrode tab stack 30 to suit a size of the final product of the secondary battery. Even at this time, in the method of fixing the electrode tab 20 with the tape 31 of the present invention, the electrode tab 20 may be fixed so that the cutting of the electrode tab 20 is easy.

FIG. 10 illustrates a state in which one end of the electrode tab stack is cut by the cutter 140. FIG. 10 illustrates a shape in which the electrode tab stack 30 and the surplus part 31-1 of the tape are neatly cut along a cutting line L. In FIG. 10, a central area of a top surface of the electrode tab 20 to which the tape 31 is not attached may be a laser welding area A on which the electrode lead 40 is welded. After the cutting operation, the welding may be performed accurately on the welding area A.

The process (d) of welding the electrode tab stack and the electrode lead may be a process of welding the taped electrode tab stack 30 and the electrode lead 40, which overlap each other, using a welder. This process may be a process of bonding the electrode tab stack 30 to the electrode lead 40 by the welding. In addition, specifically, the process (d) of welding the electrode lead 40 may be a process of laser-welding the electrode tab stack 30 and the electrode lead 40 through the laser welding.

(d) of FIG. 7 illustrates this process. This process may be performed using the laser welder 130, which is a device that irradiates welding laser to the electrode tab stack 30 and the electrode lead 40.

In addition, in Embodiment 3 of the present invention, in the process (d) of welding the electrode lead 40, the electrode tab stack 30 and the electrode lead 40 may be welded to each other while pulling the surplus part 31-1 disposed at both the sides of the electrode tab stack 30 to both the sides based on the width direction W of the electrode tab stack 30 in a state of holding the surplus part 31-1 using the clamping device 150 (see F1 and F2 of FIG. 7).

In this case, a gap between the electrode tabs 20 may be eliminated. That is, the electrode tabs 20 may be in close contact with each other. When the welding is performed with tension applied in this manner, welding quality between the electrode tab stack 30 and the electrode lead 40 may be further improved.

When using the method of gathering the electrode tabs 20 using the tape 31 according to Embodiment 3 of the present invention, the electrode tabs 20 may be gathered quickly and effectively to significantly efficiently perform main welding of the electrode lead 40 and the electrode tab 20.

### Embodiment 4

FIG. 11 is a perspective view illustrating an internal configuration of a secondary battery according to Embodiment 4 of the present invention.

Embodiment 4 of the present invention is different from Embodiments 1 to 3 in that it relates to a secondary battery manufactured by the method for manufacturing the secondary battery according to Embodiment 3.

The contents that are duplicated with Embodiments 1 to 3 will be omitted as much as possible, and Embodiment 4 will be described with a focus on the differences. That is, it is obvious that the contents that are not described in Embodiment 4 may be supplemented as contents of Embodiments 1 to 3 if necessary.

Referring to FIG. 11, a secondary battery according to Embodiment 4 of the present invention may include an electrode assembly 10, a pouch, an electrode tab stack 30, an electrode lead 40, and a tape 31.

The electrode assembly 10 may be a stack provided by stacking electrodes and separators. The pouch (not shown) may be configured to accommodate the electrode assembly 10 in an internal space. The electrode tab stack 30 may be provided by gathering the plurality of electrode tabs 20 that extend from one end of the electrode assembly 10 and are disposed inside the pouch. The tape 31 may be configured to surround the electrode tab stack 30. Here, the tape 31 may be attached to each of both ends of the electrode tab stack 30 based on a width direction W of the electrode tab stack 30.

The tape 31 may be attached to both ends of the electrode tab stack 30, and the tape 31 may include a surplus part 31-1 protruding further outward from an end of the electrode tan stack 300 in a width direction W.

The surplus part 31-1 may has a shape in which a portion of the tape 31 disposed outside the end of the electrode tab stack 30 in the width direction W and the other portion of the tape 31 face each other. The tape 31 may be attached to top and bottom surfaces of the electrode tab stack 30. In addition, the tape may be attached to at least a portion of a side surface of the electrode tab stack 30 (see FIG. 9). As the tape 31 applies tension to the electrode tab stack 30, the electrode tabs 20 may be maintained in close contact with each other.

In addition, to gather the electrode tabs 20, the electrode tabs 20 may be attached in a tight state in which tension is applied or may be attached with appropriate strength so as not to be too tight. Based on the side view, the tape 31 may be attached to a horizontal portion of a portion at which the electrode tabs 20 are gathered and may also be partially attached to an inclined portion extending from the horizontal portion toward the electrode. That is, a thickness of the electrode tab stack 30 may be constant in the horizontal portion, but may be thick in the inclined portion, and the tape 31 may be attached to portions of the horizontal portion and the inclined portion.

In addition, the tape 31 may not be attached to top and bottom surfaces of the electrode tab stack 30 on which the electrode lead 40 is to be welded. As described above, a welding area A on which the electrode lead 40 is welded may be formed at the portion at which the tape 31 is not attached (see FIG. 11). Since an area on which the tape 31 is attached is an unsuitable surface for welding, the tape 31 may not be attached to the surface to be welded.

The electrode lead 40 may have one side connected to the electrode tab stack 30 and the other side protruding to the outside of the pouch (not shown). One side of the electrode lead 40 may be connected to the electrode tab stack 30 in the welding area A through laser welding.

In addition, the secondary battery according to Embodiment 4 of the present invention as described above may be a secondary battery having excellent quality as various effects of the invention described in foregoing Embodiments 1 and 3 are expressed.

While the embodiments of the present invention have been described with reference to the specific embodiments, it will be apparent to those skilled in the art that various changes and modifications may be made without departing from the scope of the invention as defined in the following claims.

### [Description of the Symbols]

- 10:: Electrode assembly
- 20:: Electrode tab
- 30:: Electrode tab stack
- 31:: Tape
- 31-1:: Surplus part
- 40:: Electrode lead
- 41:: Lead film
- 110:: Tab guide
- 120:: Tape attaching machine
- 130:: Laser welder
- 140:: Cutter
- 150:: Clamping device
- L:: Cutting line

## Claims

1. A method for manufacturing a secondary battery, in which a plurality of electrode tabs (20) extending from one end of an electrode assembly (10) formed by stacking electrodes and separators are welded to an electrode lead (40), the method comprising:
a process (a) of preparing a tape (31) having a required size and shape;
a process (b) of gathering the plurality of electrode tabs (20) to form an electrode tab stack (30);
a process (c) of taping the electrode tab stack (30) with the tape (31); and
a process (d) of welding the electrode tab stack (30), which is taped, to the electrode lead (40).

2. The method of claim 1, further comprising a cutting process (c-1) of cutting one end of the electrode tab stack (30), which is taped, between the process (c) and the process (d).

3. The method of claim **1,** wherein the process (a) of preparing the tape (31) comprises a process of cutting the tape (31) in a required size and shape to prepare the tape (31).

4. The method of claim 1, wherein, in the process (d) of forming the electrode tab stack (30), the plurality of electrode tabs (20) are pressed or guided from upper and lower sides of the electrode tabs (20) to gather the electrode tabs (20) so as to form the electrode tab stack (30).

5. The method of claim 1, wherein, in the taping process (c), the tape (31) is attached to each of both ends of the electrode tab stack (30) based on a width direction of the electrode tab stack (30).

6. The method of claim 5, wherein, in the taping process (c), the tape (31) is attached to surround top, side, and bottom surfaces of the electrode tab stack (30).

7. The method of claim 6, wherein, in the taping process (c), the tape (31) is not attached to a portion, at which the electrode lead (40) is to be welded, on the top and bottom surfaces of the electrode tab stack (30).

8. The method of claim 1, wherein, in the taping process (c), the tape (31) is attached to each of both ends of the electrode tab stack (30) based on a width direction of the electrode tab stack (30),
wherein the tape (31) is attached to the electrode tab stack (30) so that a surplus part (31-1) protruding further outward from an end of the electrode tab stack (30) in a width direction is formed.

9. The method of claim 8, wherein, in the taping process (c), the surplus part (31-1) has a shape in which a portion and the other portion of the tape (31), which is disposed outside the end of the electrode tab stack (30) in the width direction face each other to be bonded to each other.

10. The method of claim **1,** wherein the process (b) and the process (c) are performed at the same time.

11. The method of claim 1, wherein, in the process (d) of welding the electrode lead (40), the electrode tab stack (30) and the electrode lead (40) are welded to each other by laser welding.

12. The method of claim 8, wherein, in the process (d) of welding the electrode lead (40), the electrode tab stack (30) and the electrode lead (40) are welded to each other while pulling the surplus part (31-1) disposed at each of both sides of the electrode tab stack (30) to both sides based on the width direction of the electrode tab stack (30) in a state of holding the surplus part (31-1) using a clamping device (150).

13. An apparatus for manufacturing a secondary battery, in which a plurality of electrode tabs (20) extending from one end of an electrode assembly (10) formed by stacking electrodes and separators are welded to an electrode lead (40), the apparatus comprising:
a tape cutting unit configured to cut a tape (31) to a required size and shape;
a tab guide (110) configured to gather the plurality of electrode tabs (20) so as to provide an electrode tab stack (30);
a tape attaching machine (120) configured to tape the cut tape on the electrode tab stack (30); and
a laser welder (130) configured to weld the electrode tab stack (30), which is taped, to the electrode lead (40).

14. The apparatus of claim 13, wherein the tape attaching machine (120) is configured to tape the tape (31) on the electrode tab stack (30),
wherein the tape (31) is attached to surround top, side, and bottom surfaces of the electrode tab stack (30).

15. The apparatus of claim 13, wherein the tape attaching machine (120) is configured to tape the tape (31) on the electrode tab stack (30),
wherein the tape (31) is attached to the electrode tab stack (30) so that a surplus part (31-1) protruding outward from an end of each of the electrode tabs (20) in a width direction is provided.

16. The apparatus of claim 15, further comprising a clamping device (150) configured to pull the surplus part (31-1) disposed at each of both sides of the electrode tab stack (30) to both sides based on the width direction of the electrode tab stack (30).

17. The apparatus of claim 13, further comprising a cutter (140) configured to cut one end of the electrode tab stack (30), which is taped, by the tape attaching machine (120).

18. A secondary battery comprising:
an electrode assembly (10) provided by stacking electrodes and separators;
a pouch configured to accommodate the electrode assembly (10) in an internal space;
an electrode tab stack (30) provided by gathering a plurality of electrode tabs (20) extending from one end of the electrode assembly (10) and disposed inside the pouch;
a tape (31) configured to surround the electrode tab stack (30); and
an electrode lead (40) having one side connected to the electrode tab stack (30) and the other side protruding to the outside of the pouch.

19. The secondary battery of claim 18, wherein the tape (31) is attached to each of both ends of the electrode tab stack (30) based on a width direction of the electrode tab stack (30).

20. The secondary battery of claim 18, wherein the tape is attached to each of both ends of the electrode tab stack (30) based on a width direction of the electrode tab stack (30),
wherein the tape (31) comprises a surplus part (31-1) protruding further outward from an end of the electrode tab stack (30) in a width direction.

21. The secondary battery of claim 20, wherein the surplus part (31-1) has a shape in which a portion and the other portion of the tape (31), which is disposed outside the end of the electrode tab stack (30) in the width direction face each other to be bonded to each other.

## Patentansprüche

1. Verfahren zum Herstellen einer Sekundärbatterie, bei dem eine Vielzahl von Elektrodenfahnen (20), die sich von einem Ende einer durch Stapeln von Elektroden und Separatoren gebildeten Elektrodenbaugruppe (10) erstrecken, an einen Elektrodenleiter (40) geschweißt wird, wobei das Verfahren umfasst:
• einen Prozess (a) des Vorbereitens eines Bandes (31) mit einer erforderlichen Größe und Form;
• einen Prozess (b) des Zusammenfassens der Vielzahl von Elektrodenfahnen (20), um einen Elektrodenfahnenstapel (30) zu bilden;
• einen Prozess (c) des Umwickelns des Elektrodenfahnenstapels (30) mit dem Band (31); und
• einen Prozess (d) des Schweißens des Elektrodenfahnenstapels (30), der umwickelt ist, an den Elektrodenleiter (40).

2. Verfahren nach Anspruch 1, ferner umfassend einen Schneideprozess (c-1) des Schneidens eines Endes des Elektrodenfahnenstapels (30), der umwickelt ist, zwischen dem Prozess (c) und dem Prozess (d).

3. Verfahren nach Anspruch 1, wobei der Prozess (a) des Vorbereitens des Bandes (31) einen Prozess des Schneidens des Bandes (31) in einer erforderlichen Größe und Form umfasst, um das Band (31) vorzubereiten.

4. Verfahren nach Anspruch 1, wobei im Prozess (d) des Bildens des Elektrodenfahnenstapels (30) die Vielzahl von Elektrodenfahnen (20) von einer Ober- und einer Unterseite der Elektrodenfahnen (20) her gepresst oder geführt wird, um die Elektrodenfahnen (20) zusammenzufassen, so dass der Elektrodenfahnenstapel (30) gebildet wird.

5. Verfahren nach Anspruch 1, wobei im Umwickelungsprozess (c) das Band (31) an jedem der beiden Enden des Elektrodenfahnenstapels (30), bezogen auf eine Breitenrichtung des Elektrodenfahnenstapels (30), angebracht wird.

6. Verfahren nach Anspruch 5, wobei im Umwickelungsprozess (c) das Band (31) so angebracht wird, dass es eine obere Fläche, Seitenflächen und eine untere Fläche des Elektrodenfahnenstapels (30) umgibt.

7. Verfahren nach Anspruch 6, wobei im Umwickelungsprozess (c) das Band (31) an einem Bereich, an dem der Elektrodenleiter (40) anzuschweißen ist, an der oberen Fläche und der unteren Fläche des Elektrodenfahnenstapels (30) nicht angebracht wird.

8. Verfahren nach Anspruch 1, wobei im Umwickelungsprozess (c) das Band (31) an jedem der beiden Enden des Elektrodenfahnenstapels (30), bezogen auf eine Breitenrichtung des Elektrodenfahnenstapels (30), angebracht wird,
wobei das Band (31) so an dem Elektrodenfahnenstapel (30) angebracht wird, dass ein überstehender Teil (31-1) gebildet wird, der in einer Breitenrichtung von einem Ende des Elektrodenfahnenstapels (30) weiter nach außen ragt.

9. Verfahren nach Anspruch 8, wobei im Umwickelungsprozess (c) der überstehende Teil (31-1) eine Form aufweist, bei der ein Abschnitt und der andere Abschnitt des Bandes (31), der außerhalb des Endes des Elektrodenfahnenstapels (30) in der Breitenrichtung angeordnet ist, einander zugewandt sind, um miteinander verbunden zu werden.

10. Verfahren nach Anspruch 1, wobei der Prozess (b) und der Prozess (c) gleichzeitig durchgeführt werden.

11. Verfahren nach Anspruch 1, wobei im Prozess (d) des Schweißens des Elektrodenleiters (40) der Elektrodenfahnenstapel (30) und der Elektrodenleiter (40) durch Laserschweißen miteinander verschweißt werden.

12. Verfahren nach Anspruch 8, wobei im Prozess (d) des Schweißens des Elektrodenleiters (40) der Elektrodenfahnenstapel (30) und der Elektrodenleiter (40) miteinander verschweißt werden, während der überstehende Teil (31-1), der an jeder der beiden Seiten des Elektrodenfahnenstapels (30) angeordnet ist, in einem Zustand des Haltens des überstehenden Teils (31-1) unter Verwendung einer Klemmvorrichtung (150) zu beiden Seiten, bezogen auf die Breitenrichtung des Elektrodenfahnenstapels (30), gezogen wird.

13. Vorrichtung zum Herstellen einer Sekundärbatterie, bei der eine Vielzahl von Elektrodenfahnen (20), die sich von einem Ende einer durch Stapeln von Elektroden und Separatoren gebildeten Elektrodenbaugruppe (10) erstrecken, an einen Elektrodenleiter (40) geschweißt wird, wobei die Vorrichtung umfasst:
• eine Bandschneideinheit, die dafür konfiguriert ist, ein Band (31) in eine erforderliche Größe und Form zu schneiden;
• eine Fahnenführung (110), die dafür konfiguriert ist, die Vielzahl von Elektrodenfahnen (20) zusammenzufassen, um einen Elektrodenfahnenstapel (30) bereitzustellen;
• eine Bandanbringungsmaschine (120), die dafür konfiguriert ist, den Elektrodenfahnenstapel (30) mit dem geschnittenen Band zu umwickeln; und
• ein Laserschweißgerät (130), das dafür konfiguriert ist, den Elektrodenfahnenstapel (30), der umwickelt ist, an den Elektrodenleiter (40) zu schweißen.

14. Vorrichtung nach Anspruch 13, wobei die Bandanbringungsmaschine (120) dafür konfiguriert ist, den Elektrodenfahnenstapel (30) mit dem Band (31) zu umwickeln, wobei das Band (31) so angebracht ist, dass es eine obere Fläche, Seitenflächen und eine untere Fläche des Elektrodenfahnenstapels (30) umgibt.

15. Vorrichtung nach Anspruch 13, wobei die Bandanbringungsmaschine (120) dafür konfiguriert ist, den Elektrodenfahnenstapel (30) mit dem Band (31) zu umwickeln, wobei das Band (31) so an dem Elektrodenfahnenstapel (30) angebracht ist, dass ein überstehender Teil (31-1) bereitgestellt wird, der in einer Breitenrichtung von einem Ende jeder der Elektrodenfahnen (20) nach außen ragt.

16. Vorrichtung nach Anspruch 15, ferner umfassend eine Klemmvorrichtung (150), die dafür konfiguriert ist, den an beiden Seiten des Elektrodenfahnenstapels (30) angeordneten überstehenden Teil (31-1) zu beiden Seiten, bezogen auf die Breitenrichtung des Elektrodenfahnenstapels (30), zu ziehen.

17. Vorrichtung nach Anspruch 13, ferner umfassend ein Schneidwerkzeug (140), das dafür konfiguriert ist, ein Ende des Elektrodenfahnenstapels (30), der durch die Bandanbringungsmaschine (120) umwickelt ist, zu schneiden.

18. Sekundärbatterie, umfassend:
• eine Elektrodenbaugruppe (10), die durch Stapeln von Elektroden und Separatoren bereitgestellt wird;
• einen Beutel, der dafür konfiguriert ist, die Elektrodenbaugruppe (10) in einem Innenraum aufzunehmen;
• einen Elektrodenfahnenstapel (30), der durch Zusammenfassen einer Vielzahl von Elektrodenfahnen (20), die sich von einem Ende der Elektrodenbaugruppe (10) erstrecken, bereitgestellt und innerhalb des Beutels angeordnet ist;
• ein Band (31), das dafür konfiguriert ist, den Elektrodenfahnenstapel (30) zu umgeben; und
• einen Elektrodenleiter (40), bei dem eine Seite mit dem Elektrodenfahnenstapel (30) verbunden ist und die andere Seite zur Außenseite des Beutels ragt.

19. Sekundärbatterie nach Anspruch 18, wobei das Band (31) an jedem der beiden Enden des Elektrodenfahnenstapels (30), bezogen auf eine Breitenrichtung des Elektrodenfahnenstapels (30), angebracht wird.

20. Sekundärbatterie nach Anspruch 18, wobei das Band an jedem der beiden Enden des Elektrodenfahnenstapels (30), bezogen auf eine Breitenrichtung des Elektrodenfahnenstapels (30), angebracht wird,
wobei das Band (31) einen überstehenden Teil (31-1) umfasst, der in einer Breitenrichtung von einem Ende des Elektrodenfahnenstapels (30) weiter nach außen ragt.

21. Sekundärbatterie nach Anspruch 20, wobei der überstehende Teil (31-1) eine Form aufweist, bei der ein Abschnitt und der andere Abschnitt des Bandes (31), der außerhalb des Endes des Elektrodenfahnenstapels (30) in der Breitenrichtung angeordnet ist, einander zugewandt sind, um miteinander verbunden zu werden.

## Revendications

1. Procédé de fabrication d'une batterie secondaire, dans lequel une pluralité de pattes d'électrode (20) s'étendant depuis une extrémité d'un ensemble d'électrodes (10) formé en empilant des électrodes et des séparateurs sont soudées à un conducteur d'électrode (40), le procédé comprenant :
• un processus (a) de préparation d'un ruban (31) ayant une taille et une forme requises ;
• un processus (b) de regroupement de la pluralité de pattes d'électrode (20) pour former un empilement de pattes d'électrode (30) ;
• un processus (c) de collage de l'empilement de pattes d'électrode (30) avec le ruban (31) ; et
• un processus (d) de soudage de l'empilement de pattes d'électrode (30), qui est collé, au conducteur d'électrode (40).

2. Procédé selon la revendication 1, comprenant en outre un processus de coupe (c-1) consistant à couper une extrémité de l'empilement de pattes d'électrode (30), qui est collé, entre le processus (c) et le processus (d).

3. Procédé selon la revendication 1, dans lequel le processus (a) de préparation du ruban (31) comprend un processus de coupe du ruban (31) à une taille et une forme requises pour préparer le ruban (31).

4. Procédé selon la revendication 1, dans lequel, dans le processus (d) de formation de l'empilement de pattes d'électrode (30), la pluralité de pattes d'électrode (20) sont pressées ou guidées depuis des côtés supérieur et inférieur des pattes d'électrode (20) pour regrouper les pattes d'électrode (20) de manière à former l'empilement de pattes d'électrode (30).

5. Procédé selon la revendication 1, dans lequel, dans le processus de collage (c), le ruban (31) est fixé à chacune des deux extrémités de l'empilement de pattes d'électrode (30) sur la base d'une direction de largeur de l'empilement de pattes d'électrode (30).

6. Procédé selon la revendication 5, dans lequel, dans le processus de collage (c), le ruban (31) est fixé de manière à entourer des surfaces supérieure, latérale et inférieure de l'empilement de pattes d'électrode (30).

7. Procédé selon la revendication 6, dans lequel, dans le processus de collage (c), le ruban (31) n'est pas fixé à une partie, au niveau de laquelle le conducteur d'électrode (40) doit être soudé, sur les surfaces supérieure et inférieure de l'empilement de pattes d'électrode (30).

8. Procédé selon la revendication 1, dans lequel, dans le processus de collage (c), le ruban (31) est fixé à chacune des deux extrémités de l'empilement de pattes d'électrode (30) sur la base d'une direction de largeur de l'empilement de pattes d'électrode (30), dans lequel le ruban (31) est fixé à l'empilement de pattes d'électrode (30) de sorte qu'une partie en surplus (31-1) faisant saillie plus loin vers l'extérieur depuis une extrémité de l'empilement de pattes d'électrode (30) dans une direction de largeur soit formée.

9. Procédé selon la revendication 8, dans lequel, dans le processus de collage (c), la partie en surplus (31-1) a une forme dans laquelle une partie et l'autre partie du ruban (31), qui est disposée à l'extérieur de l'extrémité de l'empilement de pattes d'électrode (30) dans la direction de largeur, se font face pour être collées l'une à l'autre.

10. Procédé selon la revendication 1, dans lequel le processus (b) et le processus (c) sont effectués en même temps.

11. Procédé selon la revendication 1, dans lequel, dans le processus (d) de soudage du conducteur d'électrode (40), l'empilement de pattes d'électrode (30) et le conducteur d'électrode (40) sont soudés l'un à l'autre par soudage laser.

12. Procédé selon la revendication 8, dans lequel, dans le processus (d) de soudage du conducteur d'électrode (40), l'empilement de pattes d'électrode (30) et le conducteur d'électrode (40) sont soudés l'un à l'autre tout en tirant la partie en surplus (31-1) disposée au niveau de chacun des deux côtés de l'empilement de pattes d'électrode (30) vers les deux côtés sur la base de la direction de largeur de l'empilement de pattes d'électrode (30) dans un état de maintien de la partie en surplus (31-1) à l'aide d'un dispositif de serrage (150).

13. Appareil de fabrication d'une batterie secondaire, dans lequel une pluralité de pattes d'électrode (20) s'étendant depuis une extrémité d'un ensemble d'électrodes (10) formé en empilant des électrodes et des séparateurs sont soudées à un conducteur d'électrode (40), l'appareil comprenant :
• une unité de coupe de ruban configurée pour couper un ruban (31) à une taille et une forme requises ;
• un guide-patte (110) configuré pour regrouper la pluralité de pattes d'électrode (20) de manière à fournir un empilement de pattes d'électrode (30) ;
• une machine de fixation de ruban (120) configurée pour coller le ruban coupé sur l'empilement de pattes d'électrode (30) ; et
• une soudeuse laser (130) configurée pour souder l'empilement de pattes d'électrode (30), qui est rubané, au conducteur d'électrode (40).

14. Appareil selon la revendication 13, dans lequel la machine de fixation de ruban (120) est configurée pour coller le ruban (31) sur l'empilement de pattes d'électrode (30), dans lequel le ruban (31) est fixé de manière à entourer des surfaces supérieure, latérale et inférieure de l'empilement de pattes d'électrode (30).

15. Appareil selon la revendication 13, dans lequel la machine de fixation de ruban (120) est configurée pour coller le ruban (31) sur l'empilement de pattes d'électrode (30), dans lequel le ruban (31) est fixé à l'empilement de pattes d'électrode (30) de sorte qu'une partie en surplus (31-1) faisant saillie vers l'extérieur depuis une extrémité de chacune des pattes d'électrode (20) dans une direction de largeur soit prévue.

16. Appareil selon la revendication 15, comprenant en outre un dispositif de serrage (150) configuré pour tirer la partie en surplus (31-1) disposée au niveau des deux côtés de l'empilement de pattes d'électrode (30) vers les deux côtés sur la base de la direction de largeur de l'empilement de pattes d'électrode (30).

17. Appareil selon la revendication 13, comprenant en outre un dispositif de coupe (140) configuré pour couper une extrémité de l'empilement de pattes d'électrode (30), qui est rubané, par la machine de fixation de ruban (120).

18. Batterie secondaire comprenant :
• un ensemble d'électrodes (10) fourni en empilant des électrodes et des séparateurs ;
• une poche configurée pour loger l'ensemble d'électrodes (10) dans un espace interne ;
• un empilement de pattes d'électrode (30) fourni en regroupant une pluralité de pattes d'électrode (20) s'étendant depuis une extrémité de l'ensemble d'électrodes (10) et disposé à l'intérieur de la poche ;
• un ruban (31) configuré pour entourer l'empilement de pattes d'électrode (30) ; et
• un conducteur d'électrode (40) ayant un côté connecté à l'empilement de pattes d'électrode (30) et l'autre côté faisant saillie vers l'extérieur de la poche.

19. Batterie secondaire selon la revendication 18, dans laquelle le ruban (31) est fixé à chacune des deux extrémités de l'empilement de pattes d'électrode (30) sur la base d'une direction de largeur de l'empilement de pattes d'électrode (30).

20. Batterie secondaire selon la revendication 18, dans laquelle le ruban est fixé à chacune des deux extrémités de l'empilement de pattes d'électrode (30) sur la base d'une direction de largeur de l'empilement de pattes d'électrode (30),
dans laquelle le ruban (31) comprend une partie en surplus (31-1) faisant saillie plus loin vers l'extérieur depuis une extrémité de l'empilement de pattes d'électrode (30) dans une direction de largeur.

21. Batterie secondaire selon la revendication 20, dans laquelle la partie en surplus (31-1) a une forme dans laquelle une partie et l'autre partie du ruban (31), qui est disposée à l'extérieur de l'extrémité de l'empilement de pattes d'électrode (30) dans la direction de largeur, se font face pour être collées l'une à l'autre.
